# EUROPÄISCHE PATENTSCHRIFT

(11) **EP 3 341 226 B1**
(45) Veröffentlichungstag und Bekanntmachung des Hinweises auf die Patenterteilung: **27.02.2019**
(21) Anmeldenummer: 16794240.8
(22) Anmeldetag: 02.11.2016
(51) Int. Cl.: B60C 23/00

(54) **RADVENTILANORDNUNG SOWIE REIFENDRUCKREGELANLAGE MIT WENIGSTENS EINER SOLCHEN RADVENTILANORDNUNG**
WHEEL VALVE ARRANGEMENT AND TIRE PRESSURE CONTROL SYSTEM HAVING AT LEAST ONE SUCH WHEEL VALVE ARRANGEMENT
AGENCEMENT DE VALVES DE ROUE ET SYSTÈME DE RÉGULATION DE LA PRESSION DES PNEUS COMPORTANT UN TEL AGENCEMENT DE VALVES DE ROUE

(30) Priorität: 04.11.2015 DE 202015105860 U
(43) Veröffentlichungstag der Anmeldung: 04.07.2018
(73) Patentinhaber: PTG Reifendruckregelsysteme GmbH, 41468 Neuss (DE)
(72) Erfinder: TIGGES, Martin, 41468 Neuss (DE); LINZBACH, Martin, 41468 Neuss (DE); HAAG, Christopher, 50737 Köln (DE)
(74) Vertreter: Haverkamp, Jens
(86) Internationale Anmeldenummer: PCT/EP2016/076329
(87) Internationale Veröffentlichungsnummer: WO 2017/076850

(56) Entgegenhaltungen:
- EP-A1- 0 387 495
- US-A1- 2015 174 972

## Beschreibung

Die Erfindung betrifft eine Radventilanordnung für eine Reifendruckregelanlage eines Fahrzeuges, umfassend ein schaltbares Radventil und eine Drucksensoreinheit mit einem Drucksensor zum Messen des Innendruckes eines auf einem Rad sitzenden Luftreifens, welcher Drucksensoreinheit ein in die Be- und Entlüftungsöffnung des Reifens hineinreichender oder durch diese hindurchgeführter Druckmesskanal zum Beaufschlagen des Drucksensors mit dem im Reifeninneren herrschenden Druck zugehörig ist, und mit einer Signalübertragungseinrichtung zum Übertragen der von dem Drucksensor erfassten Reifendruckdaten an eine fahrzeugseitige zum Steuern der Reifendruckregelung vorgesehene Steuereinheit. Ferner betrifft die Erfindung eine Reifendruckregelanlage mit einer solchen, jedem einen luftbefüllbaren Reifen tragenden und an die Reifendruckregelanlage angeschlossenen Rad zugeordneten Radventilanordnung, wobei das schaltbare Radventil einen durch eine Kolbenstange bewegbaren Ventilkörper aufweist, der mittels wenigstens eines Federelementes in der Geschlossen-Stellung gegen den ihm zugeordneten Ventilsitz wirkt. Die Erfindung betrifft ferner eine Reifendruckregelanlage mit wenigstens einer solchen Radventilanordnung.

Reifendruckregelanlagen werden bei Kraftfahrzeugen, etwa bei Nutzfahrzeugen, wie Lastkraftwagen, Schleppern, Traktoren oder Erdbewegungsmaschinen und auch bei nicht angetriebenen Fahrzeugen, wie beispielsweise Anhängern eingesetzt, um den in den Reifen befindlichen Reifendruck an unterschiedliche Betriebssituationen anpassen zu können. Eine Reifendruckanpassung erfolgt vornehmlich in Abhängigkeit von dem zu befahrenden Untergrund. Durch den Reifendruck kann die Aufstandsfläche des Reifens verändert werden. Ein Reifen weist bei einem geringeren Reifendruck eine größere Aufstandsfläche auf als mit höherem Reifendruck. Aus diesem Grunde wird man bei weichem Untergrund lieber mit einem geringeren Reifendruck und mit höherer Aufstandsfläche fahren als auf einer befestigten Fahrbahn. Ebenfalls empfiehlt es sich, den Reifeninnendruck und somit die Reifenbefüllung an den jeweiligen Beladungszustand des Fahrzeuges anzupassen. Eine Reifeninnendruckanpassung kann bei fahrendem Fahrzeug erfolgen. Durch eine optimierte Anpassung des Reifeninnendruckes können in Abhängigkeit von dem Untergrund der Rollwiderstand und der Reifenverschleiß nicht unerheblich reduziert werden. Zudem führt ein optimal eingestellter Reifeninnendruck zu einem spürbar reduzierten Kraftstoffverbrauch.

Derartige Reifendruckregelanlagen verfügen über eine Drehdurchführung als Luftübertragungswegsamkeit zwischen den fahrzeugseitigen Einrichtungen der Reifendruckregelanlage und den dazugehörigen radseitigen Aggregaten. Somit wird beispielsweise zum Erhöhen des Reifeninnendruckes Druckluft von einer fahrzeugseitigen Druckluftquelle durch die Drehdurchführung hindurch an das drehbar gelagerte Rad übertragen. Gleiches gilt im umgekehrten Falle eines gewünschten Absenkens des Reifeninnendruckes, wenn keine radseitige Reifenentlüftung vorgesehen ist.

Eine solche Drehdurchführung umfasst einen fahrzeugseitig angeordneten Stator und einen durch einen Bewegungsspalt von diesem getrennten, radseitig angeordneten Rotor. Stator und Rotor sind typischerweise koaxial zur Drehachse des Rades angeordnet. Zur Druckluftübertragung verfügen Stator und Rotor über ringförmige einander bezüglich des Bewegungsspaltes gegenüberliegende und zueinander weisend offene Nuten oder Kammern, die durch aktivierbare Dichtungen (Druckdichtungen), wie in EP 1 095 799 B1 beschrieben, für den Zeitpunkt der Druckluftübertragung zur Ausbildung einer Druckluftübertragungskammer abgedichtet werden. Radseitig ist an den Rotor der Drehdurchführung eine zur Felge führende Luftleitung vorgesehen. Diese durchgreift die Felge in einer Öffnung und mündet in das Reifeninnere. In die radseitige Luftleitung ist ein ansteuerbares Ventil - ein Radventil - eingeschaltet, welches für den Vorgang der Reifendruckregelung geöffnet und nach Abschluss des Vorganges geschlossen wird. Die Druckluft selbst wird bei einem Kraftfahrzeug typischerweise mit einem fahrzeugseitig angeordneten Kompressor als Druckluftquelle bereitgestellt. Als Kompressor dient zumeist der bei derartigen Fahrzeugen ohnehin zum Betreiben der Bremsanlage vorhandene Kompressor.

Zum Einstellen oder Ändern des Reifeninnendruckes sind unterschiedliche Verfahren bekannt geworden. In DE 27 36 603 A1 ist ein zeitgetaktetes Reifendruckänderungsverfahren beschrieben. Dieses Verfahren geht von einem definierten Reifendruck und definierten Befüll- und Entnahmezeiten aus, in denen der Reifeninnendruck um ein definiertes Maß geändert werden kann. Aus diesem Grunde erfolgt bei dieser vorbekannten Reifendruckregelanlage eine Änderung des Reifendruckes in festgelegten Schritten. Individuell kann der Reifeninnendruck bei einem solchen Verfahren nicht eingestellt werden. Eine solche Reifendruckregelanlage benötigt daher keinen Drucksensor.

In DE 26 30 511 A1 ist eine weitere Reifendruckregelanlage beschrieben. Bei dieser Reifendruckregelanlage ist eine gepulste Befüllung bzw. Entlüftung vorgesehen. Das Befüllen oder Entlüften eines Reifens erfolgt in diskreten Befüllungs- bzw. Entlüftungsschritten. An jeden Befüllungs- bzw. Entlüftungsschritt schließt sich der Schritt des Messens des Reifeninnendruckes an, damit im Anschluss an die Auswertung des ermittelten Reifeninnendruckes der nachfolgende Befüllungspuls oder Entlüftungspuls entsprechend gesteuert werden kann. Dieses Verfahren wiederholt sich so lange, bis der gewünschte Reifeninnendruck eingestellt worden ist. Um dieses iterative Befüllungs- bzw. Entlüftungsverfahren durchzuführen, ist fahrzeugseitig an die Luftleitung ein Drucksensor angeschlossen. Gemessen wird der Reifeninnendruck bei der aus diesem Dokument bekannten Reifendruckregelanlage in einer Befüllungs- bzw. Entlüftungspause, und zwar erst nachdem sich nach Beendigung eines Befüllungs- bzw. Entlüftungspulses die Luftbewegung innerhalb der Luftleitungen beruhigt hat. Mit dieser Reifendruckregelanlage können beliebige Reifendrücke eingestellt werden. Das Durchführen dieses Verfahrens benötigt jedoch eine gewisse Zeit. Dieses ist zum einen durch Einhalten der notwendigen Druckmesspausen beim Befüllen oder Entlüften bedingt. Zum anderen hat die zentrale Anordnung des Drucksensors zur Folge, dass eine Reifendruckänderung jeweils nur in einem einzigen Reifen erfolgen kann.

Auch bei Reifendruckregelanlagen, bei denen fahrzeugseitig ein Proportionalventil zum Herbeiführen der gewünschten Reifeninnendruckänderung verwendet wird, wird diese vor allem bei einer Entlüftung des Reifens als zu langsam agierend angesehen. Begründet liegt dieses in dem Konzept bei der Verwendung eines solchen Proportionalventils, da dieses mit zunehmender Annäherung an den Zieldruck und somit bei zunehmend geringerem Druckkontrast zwischen dem Zieldruck und dem Ist-Druck eine Ventilöffnung reduziert.

Eine weitere Einrichtung zur Änderung des Druckes im Reifen eines Fahrzeuges unter Verwendung eines Wechselventils ist aus EP 0 387 495 A1 bekannt. Bei dieser vorbekannten Radventilanordnung ist an die Luftzuführleitung eine Druckmesseinrichtung angeschlossen.

Aus EP 2 072 290 A2 ist eine Reifendruckregelanlage bekannt geworden, bei der der Radventilanordnung ein Druckmesssensor zugeordnet ist. Die aus diesem Dokument bekannt gewordene Drucksensoreinheit verfügt über eine Messleitung, die durch die Befüllungs- bzw. Entlüftungsöffnung des Reifens hindurchgeführt ist. Diese Messleitung erstreckt sich innerhalb des Reifens bis an eine Stelle, die von der Turbulenz der Luftströmung beim Befüllen oder Entlüften weitgehend unbeeinflusst ist. Vorgeschlagen wird, die Messleitung ausgehend von der Befüllungs- bzw. Entlüftungsöffnung über einen Winkelbetrag von etwa 180 Grad erstrecken zu lassen. Diesem Ansatz liegt die Erkenntnis zugrunde, dass zum bestimmungsgemäßen Erfassen des Reifeninnendruckes der statische Druck erfasst werden soll. Dieses ist auch der Grund dafür, dass bei den bereits eingangs beschriebenen Reifendruckregelanlagen, die einen Druckmesssensor verwenden, der Befüllungs- bzw. Entleerungsvorgang regelmäßig unterbrochen wird, um für die Phase des Druckmessens keine Turbulenzen innerhalb der Leitungen zu haben.

Auch wenn mit der aus EP 2 072 290 A2 bekannten Reifendruckregelanlage eine bestimmungsgemäße Erfassung des im Reifen aktuell herrschenden Druckes möglich ist, kann bei der vorgesehenen Verwendung eines Schlauches als Messleitung nicht sichergestellt werden, dass sich diese mit ihrer Mündung an der vorgesehenen Stelle im Reifen befindet. Überdies wäre es wünschenswert, wenn die Radventilanordnung kompakter bauende ausgelegt werden könnte.

Eine Radventilanordnung gemäß dem Oberbegriff des Anspruchs 1 ist aus US 2015/174972 A1 bekannt. In diese vorbekannte Radventilanordnung ist ein Drucksensor integriert. Dieser ist angeordnet, um innerhalb einer Luftströmungspassage in dem Ventil den Reifeninnendruck zu erfassen. Damit muss, um Turbolenzen innerhalb der genannten Leitung bei einer Druckmessung zu vermeiden, ein Befüllungs- bzw. Entleerungsvorgang unterbrochen werden, wie diese bereits zu dem vorstehend gewürdigten Stand der Technik kurz ausgeführt ist.
Ausgehend von diesem diskutierten Stand der Technik liegt der Erfindung daher die Aufgabe zugrunde, eine solche Radventilanordnung dergestalt weiterzubilden, dass nicht nur eine bestimmungsgemäße Reifeninnendruckerfassung möglich ist, sondern dass die Reifenventilanordnung auch kompakter bauend ausgelegt werden kann.

Gelöst wird diese Aufgabe erfindungsgemäß durch eine eingangs genannte, gattungsgemäße Radventilanordnung, bei der der Druckmesskanal durch die Kolbenstange und den Ventilkörper axial hindurchgeführt ist, die Kolbenstange mit ihrem dem Ventilkörper gegenüberliegenden Endabschnitt in und/oder an einem zur diesbezüglichen Ausgestaltung der Kolbenstange komplementären Führungselement geführt ist, im Führungselement sich der Druckmesskanal hinein fortsetzt und somit über den Druckmesskanal eine Fluidwegsamkeit zum Erfassen des im Reifeninneren herrschenden statischen Luftdruckes zwischen dem Reifeninneren und dem Drucksensor hergestellt ist.
Bei dieser Radventilanordnung verfügt das schaltbare Radventil über einen Ventilkörper, der mittels einer Kolbenstange bewegt werden kann. In der Geschlossen-Stellung des Radventils wirkt der Ventilkörper aufgrund wenigstens eines auf den Ventilkörper wirkenden Federelementes gegen den ihm zugeordneten Ventilsitz. Die Kolbenstange selbst ist zum Schalten der Ventilstellung bewegbar. Gemäß einem Ausführungsbeispiel trägt die Kolbenstange an ihrem dem Ventilkörper gegenüberliegenden Ende einen Steuerkolben. Dieser ist in einem Steuerzylinder geführt. Bei einer solchen Ausgestaltung ist die Kolbenstange pneumatisch bewegbar.

Die Kolbenstange und der Ventilkörper dieser Radventilanordnung verfügen über einen axial diese Teile durchgreifenden Druckmesskanal. Auf diese Weise ist eine Fluidwegsamkeit von der Seite des Reifeninneren von dem Ventilkörper aus dem Be-und Entlüftungskanal heraus bereitgestellt. Der Druckmesskanal setzt sich in ein gegenüber der Bewegung der Kolbenstange ortsfestes Führungselement fort, in bzw. an dem die Kolbenstange geführt ist. Beispielsweise kann es sich bei einem solchen Führungselement um einen Führungszapfen handeln, auf dem die Kolbenstange mit einer Führungsbuchse sitzt und sodann teleskopierbar gegenüber dem Führungszapfen bewegbar ist. Der Druckmesskanal befindet sich sodann innerhalb des Führungszapfens, typischerweise mit einem axialen Verlauf, und mündet an der Stirnseite des Führungszapfens, mit dem dieser in Richtung zu der Kolbenstange weist. Eine Führung, wie vorbeschrieben, kann auch dadurch bereitgestellt sein, dass das gegenüber der Kolbenstange ortsfeste Führungselement als Führungsbuchse ausgeführt ist, in die die Kolbenstange mit einem Führungszapfen eingreift. Die Teleskopierbarkeit der Kolbenstange gegenüber dem Führungselement ist abgedichtet, beispielsweise unter Verwendung eines oder auch mehrerer Dichtringe, typischerweise O-Ringe, die auf dem Führungszapfen sitzen. An den gegenüber der bewegbaren Kolbenstange ortsfesten Teil ist der Druckmesssensor angeschlossen. Auf diese Weise ist eine Fluidwegsamkeit aus dem Reifeninneren durch den Ventilkörper hindurch zu dem Druckmesssensor geschaffen. Eine Reifendruckmessung kann in jeder Stellung des Radventils vorgenommen werden, also: bei geschlossenem Radventil oder auch bei geöffneten Radventil.

Das Konzept, den Druckmesskanal zentral durch das Radventil hindurchzuführen, führt zu einer nicht unbeträchtlichen Reduzierung des für die Realisierung einer solchen Radventilanordnung benötigten Bauraums. Ausgenutzt wird hierbei auch der Umstand, dass der Durchmesser des Druckmesskanals nicht besonders groß sein muss. Der Durchmesser des Druckmesskanals ist typischerweise um ein Vielfaches kleiner als der Durchmesser des für die Befüllung bzw. Entleerung des Reifens dienende Kanal.

Vorzugsweise ist der Ventilkörper starr an die Kolbenstange angeschlossen. Es ist dann ausreichend, für die Rückstellung der Kolbenstange aus einer den Ventilkörper von dem Ventilsitz abgerückten Offenstellung des Radventils in die Geschlossen-Stellung eine Rückstellfeder oder Rückstellfederanordnung an nur einer Position innerhalb des Radventils vorzusehen. Vorzugsweise erfolgt eine solche Rückstellung unter Verwendung einer einzigen Schraubendruckfeder.

Der Druckmesskanal der Kolbenstange reicht bei einer bevorzugten Ausgestaltung nur in den Radventilanschlussstutzen hinein, an den die Radventilanordnung angeschlossen ist. Ein solcher Radventilanschlussstutzen ist in der Felge des den Reifen tragenden Rades verankert und ragt von dieser außenseitig ab. Bei dieser Ausgestaltung befindet sich somit die reifenseitige Mündung des Druckmesskanals innerhalb dieses Radventilanschlussstutzens. Es hat sich wider Erwarten und wohl auch entgegen der herrschenden Lehre gezeigt, dass eine statische Luftdruckmessung mit hinreichender Genauigkeit selbst dann vorgenommen werden kann, wenn sich die Mündung des Druckmesskanals an dieser, bei einem Befüllungs- oder Entleerungsvorgang durch eine hohe Strömungsgeschwindigkeit gekennzeichneten Position befindet. Die Strecke zwischen der zum Reifeninneren weisenden Mündung des Druckmesskanals bis zum Drucksensor wird für eine Beruhigung des Luftstroms genutzt, weshalb selbst dann, wenn sich die Mündung des Druckmesskanals innerhalb des Reifenventilanschlussstutzens befindet, der im Reifeninneren herrschende statische Luftdruck gemessen werden kann. In Abhängigkeit von der diesbezüglich benötigten Länge wird man den Drucksensor entsprechend anordnen. Ist innerhalb des Radventilanschlussstutzens nur mit einer geringeren Strömungsgeschwindigkeit zu rechnen, kann der Druckmesssensor beispielsweise unmittelbar in Verlängerung des axial die Kolbenstange durchgreifenden Druckmesskanals innerhalb des zu diesem ortsfesten Führungselementes, also beispielsweise innerhalb des ortsfesten Führungszapfens angeordnet sein. Bei höheren zu erwartenden Strömungsgeschwindigkeiten in dem Radventilanschlussstutzen bei einer Befüllung oder Entleerung des Reifeninneren wird man die Fortsetzung des Druckmesskanals innerhalb des Gehäuses des Radventils vorzugsweise mit ein oder mehreren Richtungsänderungen auslegen, bevor dieser Druckmesskanal den Druckmesssensor beaufschlagt. Diese ein- oder mehrfachen Richtungsänderungen im Verlauf des Druckmesskanals erstrecken sich vorzugsweise um 90 Grad, da diese in der Herstellung besonders einfach ist. Bei einer solchen Konzeption kann das Gehäuse der Radventilanordnung über einen Messanschluss verfügen, an den ein Druckmesssensor lösbar angeschlossen ist.

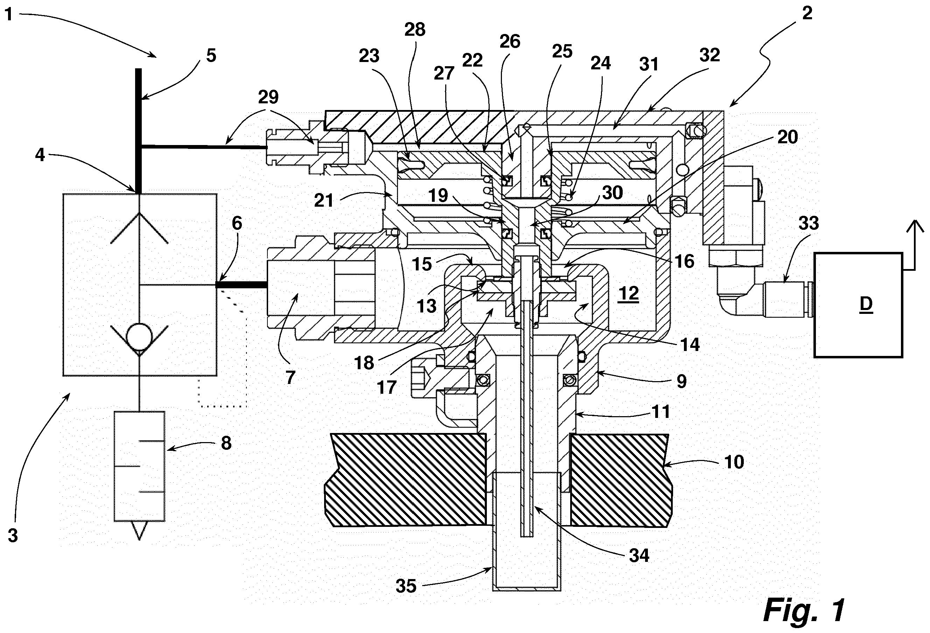

Nachfolgend ist die Erfindung anhand eines Ausführungsbeispiels unter Bezugnahme auf die beigefügte **Figur 1** beschrieben. **Figur 1** zeigt in einer schematisierten Darstellung eine Radventilanordnung 1 einer im Übrigen nicht näher dargestellten Reifendruckregelanlage. Die Radventilanordnung 1 umfasst ein Radventil 2, welches in einem Schnitt dargestellt ist, sowie ein Schnellentlüftungsventil 3, welches mit seinem Schaltsymbol gezeigt ist. Das Radventil 2 und das Schnellentlüftungsventil 3 bilden eine kompakte Baugruppe. Das Schnellentlüftungsventil 3 ist ein nach dem Prinzip einer Druckwaage arbeitendes Wechselventil. Sein Eingang 4 ist an eine Luftversorgungsleitung 5 angeschlossen. Der Regeleingang 6 des Schnellentlüftungsventils 3 ist an einen Reifenanschlusskanal 7 des Radventils 2 angeschlossen, über den eine Fluidwegsamkeit zwischen dem Regeleingang 6 und dem Reifeninneren, an den die Radventilanordnung 1 angeschlossen ist, hergestellt werden kann. Das Schnellentlüftungsventil 3 umfasst des Weiteren einen Ausblasausgang 8, aus dem im Falle einer gewünschten Reifendruckerniedrigung die aus dem Reifen über den Reifenanschlusskanal 7 abgelassene Luft in die Umgebung austritt.

Die Luftversorgungsleitung 5 ist in nicht näher dargestellter Art und Weise an eine einkanalige Drehdurchführung mit aktivierbaren Druckdichtungen angeschlossen. Fahrzeugseitig befindet sich eine Druckluftversorgung sowie eine Steuereinheit für die Reifenregelung, über welche Druckversorgung die notwendige Druckluft zum Steuern der Radventilanordnung 1 bereitgestellt wird. Übertragen wird diese von der fahrzeugseitigen Druckluftversorgung an die Radventilanordnung 1 über die vorgenannte einkanalige Drehdurchführung.

Das Radventil 2 umfasst einen Radanschluss 9, ausgeführt mit dem dargestellten Ausführungsbeispiel als Radventilanschlussstutzenaufnahme, mit der die Radventilanordnung an den in einer Felge 10 eines den Reifen tragenden Rades festgesetzten Radventilanschlussstutzen 11 angeschlossen ist. Der Radanschluss 9 ist auf das freie Ende des Radventilanschlussstutzens 11 aufgesetzt und daran festgelegt.

Das Radventil 2 verfügt über den bereits vorgenannten Reifenanschlusskanal 7, der den Regeleingang 6 des Schnellentlüftungskanals 3 mit dem Radanschluss 9 und, wenn dieser, wie in Figur 1 dargestellt, an einen Radventilanschlussstutzen 11 angeschlossen ist, mit dem Reifeninneren verbindet. Der Reifenanschlusskanal 7 ist bei dem dargestellten Ausführungsbeispiel als Winkelstück ausgeführt. In dem Bereich der Umlenkung, der durch eine ringförmige Umlenkkammer 12 bereitgestellt ist, befindet sich ein Ventilsitz 13. Der Ventilsitz 13 ist in Richtung zu dem Radanschluss 9 weisend gerichtet und wird durch eine umlaufende gerundete Kante eines zylindrischen Vorsprunges 14 bereitgestellt, wobei der Ventilsitz 13 selbst an einen in radialer Richtung nach innen gerichteten umlaufenden Steg 15 angeformt ist. Eingefasst wird durch den Steg 15 bzw. den Ventilsitz 13 eine Ventilöffnung 16.

Mit dem Ventilsitz 13 wirkt in der Geschlossen-Stellung des Radventils 2 ein Ventilkörper 17 zusammen, der an seiner zu dem Ventilsitz 13 weisenden Seite eine Dichtscheibe 18 trägt. Diese weist eine gewisse Materialelastizität auf, damit zum Herbeiführen der gewünschten Dichtwirkung bei geschlossenem Radventil 2 der Ventilsitz 13 sich geringfügig in die Dichtfläche der Dichtscheibe 18 eindrücken kann. Getragen ist der Ventilkörper 17 von einer Kolbenstange 19. Die Kolbenstange 19 ist durch die dem den Ventilsitz 13 tragenden Ringzylinder 14 in Bezug auf den Radanschluss 9 gegenüberliegende Umlenkkammerwand 20 abgedichtet hindurch geführt. Außerhalb der Umlenkkammer 12 greift die Kolbenstange 19 in einen Steuerzylinder 21 ein. Die Kolbenstange 19 trägt an ihren dem Ventilkörper 17 gegenüberliegenden Ende einen Steuerkolben 22, der in radialer Richtung außenseitig mittels einer umfänglichen Kolbendichtung 23 an der Innenwand des Steuerzylinders abgestützt ist.

Figur 1 zeigt das Radventil 2 in seiner Geschlossen-Stellung, in der der Ventilkörper 17 an dem Ventilsitz 13 anliegt. Zum Gewährleisten eines sicheren Ventilsverschlusses dient eine Schraubendruckfeder 24, durch die die Dichtseite der Dichtscheibe 18 des Ventilkörpers 17 unter Vorspannung den dem Ventilsitz 13 anliegt. Die Schraubendruckfeder 24 stützt sich einerseits auf der von der Umlenkkammer 12 wegweisenden Seite der Umlenkkammerwand 20 und andererseits an der zu dieser Wand 20 weisenden Seite des Steuerkolbens 22 ab.

Zur weiteren Führung der Kolbenstange 19 - neben ihrer Führung in dem Durchbruch durch die Umlenkkammerwand 20 - dient eine in diese Rückseitig eingebrachte zylindrische Führungsbuchse 25, in die ein gegenüber der Bewegung der Kolbenstange 19 ortsfester Führungszapfen 26 eingreift. Der Führungszapfen 26 trägt außenseitig einen als O-Ring ausgeführten Dichtring 27 zur Abdichtung.

Der Steuerzylinder 21 ist durch den Steuerkolben 22 in zwei Kammern unterteilt, wobei eine der beiden Kammern, und zwar diejenige, die sich an der der Schraubendruckfeder 24 gegenüber liegenden Seite befindet, eine Steuerkammer 28 bildet. Zu diesem Zweck ist an die Steuerkammer eine Steuerleitung 29 angeschlossen, die ihrerseits wiederum an die Luftversorgungsleitung 5 angeschlossen ist. Wird die Steuerkammer 28 mit einem gewissen Luftdruck beaufschlagt, wird hierdurch der Steuerkolben 22 und damit die Kolbenstange 19 mit den darauf sitzenden Ventilkörper 17 längsaxial bewegt, wodurch der Ventilkörper 17 von dem Ventilsitz 13 abgehoben und das Radventil 2 geöffnet wird. Der Anschluss der Steuerkammer 28 an die Luftversorgungsleitung 5 ist bei dem dargestellten Ausführungsbeispiel lediglich schematisiert gezeigt. Bevorzugt ist eine Ausgestaltung, bei der die Steuerleitung 29 unmittelbar an eine Anschlussarmatur des Schnellentlüftungsventils 3 angeschlossen ist, sodass bei einer Montage der Radventilanordnung 1 lediglich die Luftversorgungsleitung 5 an den Eingang des Schnellentlüftungsventils 3 angeschlossen werden muss.

Der Durchmesser des Steuerkolbens 22 ist, wie aus Figur 1 deutlich ersichtlich, um ein Mehrfaches größer als der Durchmesser des Ventilkörpers 17. Bei dem dargestellten Ausführungsbeispiel ist der Durchmesser des Steuerkolbens 22 etwa 2,5-mal so groß wie der Durchmesser des Ventilkörpers 17. Die für einen Betrieb des Radventils relevante Fläche des Kolbenbodens des Steuerkolbens 22 ist damit um ein Vielfaches größer als diejenige des Ventilkörpers 17. Diese Untersetzung wird benötigt, damit der Steuerkolben 22 auch bei geringem, in der Luftversorgungsleitung 5 befindlichen Druck - dem Zieldruck der Reifendruckregelung - bewegt werden kann, um den Ventilkörper 17 von dem Ventilsitz 13 zum Öffnen des Radventils 2 abzurücken. Insofern ist die diesbezüglich wirksame Fläche des Kolbenbodens des Steuerkolbens 22 an die zu überwindenden Gegenkräfte angepasst, um die gewünschte Bewegung bei dem jeweils geforderten Mindestreifenfülldruck in der Luftversorgungsleitung 5 vornehmen zu können. Als Gegendruck wirken auf den Steuerkolben 22 die Schraubendruckfeder 24 und für den Fall, dass eine Reifendruckerniedrigung vorgesehen ist, der im Reifenventil 11 anstehende und auf die Rückseite des Ventilkörpers 17 wirkende Reifeninnendruck. Bei dem dargestellten Ausführungsbeispiel sind die diesbezüglich auf eine Steuerkolbenansteuerung Einfluss nehmenden Bauteile - Schraubendruckfeder 24, Größe des Ventilkörpers 17 bzw. Größe der Ventilöffnung 16 -entsprechend aufeinander abgestimmt. Dieses ist gerade bei den Fahrzeugen, bei denen derartige Radventilanordnungen zum Einsatz kommen, selbst ohne den Durchmesser des Steuerkolbens übermäßig groß konzipieren zu müssen, möglich, da Reifen von landwirtschaftlich genutzten Fahrzeugen, wie beispielsweise Traktoren oder deren Anhänger mit einem maximalen Reifenfülldruck von 2 oder 2.5 bar und einem Mindestreifenfülldruck von 0,5 bar gefahren werden. Infolge dessen ist der Druckkontrast, gegen den der Ventilkörper 17 bei einem maximal geführten Reifen bewegt werden muss, wenn eine Druckerniedrigung vorgesehen ist, nicht übermäßig hoch.

Somit wird bei dem beschriebenen Konzept der Radventilanordnung in geschickter Weise eine pneumatische Untersetzung genutzt, um trotz einkanaliger Drehdurchführung im Zusammenhang mit einer Reifendruckregelanlage radseitig dennoch ein schaltbares Radventil vorzusehen, um die Radventilanordnung ebenso schalten zu können, wie bei einer herkömmlichen zweikanaligen Radventilanordnung. Aus diesem Grunde kann bei einer Nichtbenutzung der Reifenregelung die Drehdurchführung drucklos bezüglich der Druckdichtungen sein.

Bei dem dargestellten Ausführungsbeispiel ist die Kolbenstange 19 als Hohlstange ausgeführt. Der innere Kanal 30 der Kolbenstange 19 steht in Fluidverbindung mit einem Luftkanal 31, eingebracht in den Deckel 32 des Steuerzylinders 21. Der Luftkanal 31 setzt sich fort in den Führungszapfen 26 und mündet an dessen Stirnseite und steht daher in Fluidkommunikation mit dem Kanal 30 der Kolbenstange 19. Das andere Endes des Luftkanals 31 ist an einen Messanschluss 33 geführt, an dem ein Druckmessgerät anschließbar ist. Bei dem dargestellten Ausführungsbeispiel ist an dem Messanschluss 33 eine Druckmesssensoreinheit D angeschlossen. Die Druckmesssensoreinheit D verfügt über einen Druckmesssensor, der durch den Ausgang des Messanschlusses 33 beaufschlagt ist. Bei einem Betrieb der Radventilanordnung 1, wenn dieses an ein Rad angeschlossen ist, befindet sich an dem Messanschluss 33 ein Batterie betriebener Druckmesssensor, der drahtlos seine Messwerte an die fahrzeugseitige Steuereinrichtung zum Steuern der Reifendruckregelanlage sendet. Bei dieser Ausgestaltung befindet sich der Druckmesssensor außerhalb des aus Metall gefertigten Gehäuses des Radventils 2.

In das freie Ende der Kolbenstange 19 ist ein Messröhrchen 34, welches durchaus auch als Messschlauch ausgeführt sein kann, eingesetzt. Dieses reicht bis in den Radventilanschlussstutzen 11 und endet bei dem dargestellten Ausführungsbeispiel in diesem. Es versteht sich, dass mit einer Bewegung des Stellkolbens 19 auch das Messröhrchen 34 bewegt wird.

Über den durch das Messröhrchen 34, den Kanal 30, den Luftkanal 31 bis an den Messanschluss 33 bereitgestellten Druckmesskanal kann der Reifeninnendruck als statischer Luftdruck auch während des Vorganges einer Reifenbefüllung oder einer Reifenentleerung gemessen werden. Interessanterweise hat sich gezeigt, dass eine Erfassung des statischen Luftdruckes auch dann möglich ist, wenn sich die reifenseitige Mündung des Messröhrchens 34 innerhalb des Radventilanschlussstutzens 11 befindet, obwohl an dieser Stelle bei einer Reifendruckregelung besonders hohe Strömungsgeschwindigkeiten herrschen. Die Erfassung des Luftdruckes bzw. des sich ändernden Luftdruckes bei einer Reifenbefüllung oder einer Reifenentleerung erlaubt eine Steuerung des Befüllungs- oder Entleerungsprozesses über einen solchen Druckmesssensor. Dieses erlaubt nicht nur eine exakte Bestimmung des aktuellen Reifeninnendruckes, sondern zudem eine besonders rasche Reifendruckregelung. Bei vielen Reifendruckregelanlagen dienen Proportionalventile dem Zweck einer Einregelung des gewünschten Reifeninnendruckes. Derartige Ventile haben jedoch zum Nachteil, dass mit abnehmenden Druckkontrast zwischen dem Zieldruck (Soll-Druck) und dem IST-Druck die Druckausgleichsgeschwindigkeit abnimmt. Daher wird für manche Anwendungen dieser Art der Druckregelung als zu langsam angesehen. Wird der Druck hingegen über eine an Messanschluss 33 angeschlossene Druckmesssonde erfasst, kann der Reifenbefüllungs- oder Entleerungsprozess exakt dann beendet werden, wenn sich der gewünschte Reifeninnendruck eingestellt hat. Der Befüllungs- bzw. Entleerungsprozess verläuft über die gesamte Zeit der Reifenbefüllung bzw. Reifenentleerung mit maximaler Geschwindigkeit.

Angeschlossen an den Radventilanschlussstutzen 11 ist in das Reifeninnere hineinragend ein Filterkorb 35. Der Filterkorb 35 ist bei dem dargestellten Ausführungsbeispiel als Siebkorb ausgeführt und dient zum Verhindern von Eindringen von der Innenwand des Reifens gelösten Gummipartikeln in das Radventil 2 und auch in das Messröhrchen 34 mit seinem relativ kleinen Durchmesser. Durch den Filterkorb 35 werden wirksam derartige, sich bei einem Fahrbetrieb des Reifens lösende Gummipartikeln gehindert, in den Radventilanschlussstutzen 11 einzudringen, so dass die Dichtigkeit des Radventils 2 und die Durchgängigkeit des Messkanals nicht durch Verschmutzungen beeinträchtigt ist.

In einem weiteren, in den Figuren nicht dargestellten Ausführungsbeispiel erfolgt ein Schalten des Radeventils durch den im Reifeninneren herrschenden Druck. Bei dieser Ausgestaltung ist die Steuerkammer sodann nicht über eine Steuerleitung an die Luftversorgungsleitung angeschlossen. Genutzt wird bei diesem Konzept das Vorhandensein des Messkanals. Bei dieser Ausgestaltung ist der vorbeschriebene Messkanal über einen Steuerkanal mit der Steuerkammer verbunden. Eingeschaltet ist in den Steuerkanal ein Magnetventil. Ist dieses geöffnet, wird die Steuerkammer mit dem im Reifeninneren herrschenden Druck beaufschlagt, wodurch das Radventil in seine Offen-Stellung gebracht wird. Angesteuert wird das Magnetventil über einen entsprechenden Ansteuerbefehl, der durchaus auch drahtlos übertragen werden kann. Genutzt werden kann für diese Zwecke die drahtlose Kommunikationsstrecke zwischen der Druckmesssensoreinheit und einer fahrzeugseitigen Steuereinrichtung. Die Druckmesssensoreinheit und das Magnetventil können von ein- und derselben Stromquelle gespeist sein.

Vorteilhaft bei der vorbeschriebenen Erfassung des Reifeninnendruckes mit dem das Radventil durchgreifenden Messkanal ist auch, dass für diese Zwecke lediglich eine einzige Durchbrechung in der Felge des Rades erforderlich ist.

Die Erfindung ist anhand eines Ausführungsbeispiels unter Bezugnahme auf die beigefügten Figuren beschrieben. Ohne den Umfang der geltenden Ansprüche zu verlassen, ergeben sich für einen Fachmann zahlreiche weitere Ausgestaltungen, die Erfindung verwirklichen zu können.

**Bezugszeichenliste**

| | | | |
|---|---|---|---|
| 1 | Radventilanordnung | 31 | Luftkanal |
| 2 | Radventil | 32 | Deckel |
| 3 | Schnellentlüftungsventil | 33 | Messanschluss |
| 4 | Eingang | 34 | Messröhrchen |
| 5 | Luftversorgungsleitung | 35 | Filterkorb |
| 6 | Regeleingang | D | Druckmesssensoreinheit |
| 7 | Reifenanschlusskanal | | |
| 8 | Ausblasausgang | | |
| 9 | Radanschluss | | |
| 10 | Felge | | |
| 11 | Radventilanschlussstutzen | | |
| 12 | Umlenkkammer | | |
| 13 | Ventilsitz | | |
| 14 | Vorsprung | | |
| 15 | Steg | | |
| 16 | Ventilöffnung | | |
| 17 | Ventilkörper | | |
| 18 | Dichtscheibe | | |
| 19 | Kolbenstange | | |
| 20 | Umlenkkammerwand | | |
| 21 | Steuerzylinder | | |
| 22 | Steuerkolben | | |
| 23 | Kolbendichtung | | |
| 24 | Schraubendruckfeder | | |
| 25 | Führungsbuchse | | |
| 26 | Führungszapfen | | |
| 27 | Dichtung | | |
| 28 | Steuerkammer | | |
| 29 | Steuerleitung | | |
| 30 | Kanal | | |

## Patentansprüche

1. Radventilanordnung für eine Reifendruckregelanlage eines Fahrzeuges, umfassend ein schaltbares Radventil (2) und eine Drucksensoreinheit (D) mit einem Drucksensor zum Messen des Innendruckes eines auf einem Rad sitzenden Luftreifens, welcher Drucksensoreinheit (D) ein in die Be- und Entlüftungsöffnung des Reifens hineinreichender oder durch diese hindurchgeführter Druckmesskanal zum Beaufschlagen des Drucksensors mit dem im Reifeninneren herrschenden Druck zugehörig ist, und mit einer Signalübertragungseinrichtung zum Übertragen der von dem Drucksensor erfassten Reifendruckdaten an eine fahrzeugseitige zum Steuern der Reifendruckregelung vorgesehene Steuereinheit, wobei das schaltbare Radventil (2) einen durch eine Kolbenstange (19) bewegbaren Ventilkörper (17) aufweist, der mittels wenigstens eines Federelementes (24) in der Geschlossen-Stellung gegen den ihm zugeordneten Ventilsitz (13) wirkt, **dadurch gekennzeichnet, dass** der Druckmesskanal durch die Kolbenstange (19) und den Ventilkörper (17) axial hindurchgeführt ist, die Kolbenstange (19) mit ihrem dem Ventilkörper (17) gegenüberliegenden Endabschnitt in und/oder an einem zur diesbezüglichen Ausgestaltung der Kolbenstange (19) komplementären Führungselement (26) geführt ist, im Führungselement sich der Druckmesskanal hinein fortsetzt und somit über den Druckmesskanal eine Fluidwegsamkeit zum Erfassen des im Reifeninneren herrschenden statischen Luftdruckes zwischen dem Reifeninneren und dem Drucksensor hergestellt ist.

2. Radventilanordnung nach Anspruch 1, **dadurch gekennzeichnet, dass** der geführte Endabschnitt der Kolbenstange (19) eine Führungsbuchse (25) und als Führungselement ein in die Führungsbuchse (25) hineinreichender Führungszapfen (26) ist, auf dem die Kolbenstange (19) geführt ist.

3. Radventilanordnung nach Anspruch 1 oder 2, **dadurch gekennzeichnet, dass** der Ventilkörper (17) auf der Kolbenstange (19) sitzt.

4. Radventilanordnung nach einem der Ansprüche 1 bis 3, **dadurch gekennzeichnet, dass** die Kolbenstange (19) den Ventilkörper (17) durchgreift und bis in einen an dem den Reifen tragenden Rad befestigten Radventilanschlussstutzen (11) hineinreicht.

5. Radventilanordnung nach Anspruch 4, **dadurch gekennzeichnet, dass** der in den Radventilanschlussstutzen (11) hineinreichende Abschnitt der Kolbenstange (19) als die Kolbenstange (19) verlängerndes Messröhrchen (34) ausgeführt ist.

6. Radventilanordnung nach Anspruch 2, **dadurch gekennzeichnet, dass** der Druckmesssensor in dem Führungszapfen oder in Fortsetzung des Führungszapfens angeordnet ist.

7. Radventilanordnung nach einem der Ansprüche 1 bis 5, **dadurch gekennzeichnet, dass** sich der Druckmesskanal aus dem Führungselement in oder am Gehäuse des Radventils (2) fortsetzt, wobei zwischen dem Abschnitt des Druckmesskanals innerhalb des Führungselementes (26) und dem Druckmesssensor wenigstens eine Richtungsänderung im Verlauf des Druckmesskanals vorgesehen ist.

8. Radventilanordnung nach Anspruch 7, **dadurch gekennzeichnet, dass** die wenigstens eine Richtungsänderung eine Richtungsänderung im Verlauf des Druckmesskanals um 90 Grad ist.

9. Radventilanordnung nach Anspruch 8, **dadurch gekennzeichnet, dass** die Radventilanordnung (1) einen Messanschluss (33) aufweist, an den die Drucksensoreinheit (D) lösbar angeschlossen ist.

10. Radventilanordnung nach einem der Ansprüche 1 bis 9, **dadurch gekennzeichnet, dass** die Kolbenstange (19) einen in einem Steuerzylinder (21) geführten Steuerkolben (22) trägt und der Steuerzylinder (21) mit seiner durch die Ansteuerseite des Steuerkolbens (22) begrenzten Steuerkammer (28) an eine pneumatisch beaufschlagbare Steuerleitung (29) anschließbar oder angeschlossen ist.

11. Reifendruckregelanlage für ein Fahrzeug mit einer fahrzeugseitig angeordneten Druckluftquelle, mit einer jedem an die Reifendruckregelanlage angeschlossenen Rad zugeordneten Drehdurchführung zum Übertragen von Druckluft an das den Reifen tragende Rad, mit einer Steuereinrichtung zum Steuern des Prozesses des Anhebens und/oder Absenkens des Reifeninnendruckes der an die Reifendruckregelanlage angeschlossenen Reifen und mit einer jedem an die Reifendruckregelanlage angeschlossenen Rad zugeordneten Radventilanordnung (1) nach einem der Ansprüche 1 bis 10.

## Claims

1. Wheel valve arrangement for a tire pressure control system of a vehicle, comprising a controllable wheel valve (2) and a pressure sensor unit (D) having a pressure sensor for measuring the internal pressure of a pneumatic tire sealed on a wheel, which pressure sensor unit (D) belongs to a pressure measuring channel reaching into the inflation and bleed opening of the tire or led through the latter in order to apply the pressure prevailing in the interior of the tire to the pressure sensor, and having a signal transmission device for transmitting the tire pressure data acquired by the pressure sensor to a control unit provided on the vehicle for controlling the tire pressure control system, wherein the controllable wheel valve (2) comprises a valve body (17) which can be moved by a piston rod (19), which, by means of at least one spring element (24), in the closed state, acts against the valve seat (13) assigned to it, **characterised in that** the pressure measuring channel is led axially through the piston rod (19) and the valve body (17), the piston rod (19) being guided by its end section opposite the valve body (17) in and/or on a guide element (26) that is complementary to the relevant configuration of the piston rod (19), in which guide element the pressure measuring channel continues and thus, via the pressure measuring channel, a fluid path for acquiring the static air pressure prevailing in the interior of the tire is produced between the interior of the tire and the pressure sensor.

2. Wheel valve arrangement according to claim 1, **characterised in that** the guided end section of the piston rod (19) is a guide sleeve (25), and the guide element is a guide pin (26) extending into the guide sleeve (25), on which the piston rod (19) is guided.

3. Wheel valve arrangement according to claim 1 or 2, **characterised in that** the valve body (17) sits on the piston rod (19).

4. Wheel valve arrangement according to any one of claims 1 to 3, **characterised in that** the piston rod (19) engages through the valve body (17) and extends as far as a wheel valve connection socket (11) secured to the wheel carrying the tire.

5. Wheel valve arrangement according to claim 4, **characterised in that** the section of the piston rod (19) extending into the wheel valve connection socket (11) is configured as a measuring tube (34) extending the piston rod (19).

6. Wheel valve arrangement according to claim 2, **characterised in that** the pressure measuring sensor is arranged in the guide pin or in the continuation of the guide pin.

7. Wheel valve arrangement according to any one of claims 1 to 5, **characterised in that** the pressure measuring channel extends out of the guide element in or at the housing of the wheel valve (2), wherein, provided between the section of the pressure measuring channel inside the guide element (26) and the pressure measuring sensor, there is at least one change of direction of the pressure measuring channel.

8. Wheel valve arrangement according to claim 7, **characterised in that** the at least one change of direction is a change of direction of 90 degrees in the course of the pressure measuring channel.

9. Wheel valve arrangement according to claim 8, **characterised in that** the wheel valve arrangement (1) comprises a measurement connection (33), to which the pressure sensor unit (D) is detachably connected.

10. Wheel valve arrangement according to any one of claims 1 to 9, **characterised in that** the piston rod (19) carries a control piston (22), guided in a control cylinder (21), and the control cylinder (21) can be connected or is connected, by its control chamber (28), delimited by the actuation side of the control piston (22), to a control line (29) which can be subjected to pneumatic pressure.

11. Tire pressure control system for a vehicle, with a compressed air source arranged on the vehicle side, with a rotary passage assigned to each wheel connected to the tire pressure control system for transferring compressed air to the wheel carrying the tire, with a control device for controlling the process of raising and/or lowering the tire internal pressure of the tires connected to the tire pressure control system, and with a wheel valve arrangement (1) according to any one of claims 1 to 10 allocated to each wheel connected to the tire pressure control system.

## Revendications

1. Agencement de valve de roue pour un système de régulation de la pression des pneus d'un véhicule, comprenant une valve de roue (2) commutable et une unité à capteur de pression (D) avec un capteur de pression pour mesurer la pression interne d'un pneu monté sur la roue, laquelle unité à capteur de pression (D) comprend un canal de mesure de la pression plongeant dans l'ouverture de gonflage ou de dégonflage d'un pneu ou la traversant, afin de fournir au capteur de pression la pression instaurée à l'intérieur du pneu, et un équipement de transfert de signaux destiné à transférer les données de pression du pneu saisies par le capteur de pression vers l'unité de commande prévue du côté du véhicule afin de gérer la régulation de la pression des pneus, laquelle valve de roue (2) commutable présentant un corps de valve (17) mobile à travers une tige de piston (19), qui agit, en position fermée, à l'aide d'au moins un élément à ressort (24) contre le siège de valve (13), **caractérisé en ce que** le canal de mesure de la pression traverse axialement la tige de piston (19) et le corps de valve (17), que la tige de piston (19) passe par son tronçon d'extrémité, situé à l'opposé du corps de valve, dans et/ou contre un élément de guidage (26) dont la conception est à cet effet complémentaire à la tige de piston (19), que le canal de mesure de la pression se prolonge dans l'élément de guidage et qu'une voie de transfert de fluide est ainsi réalisée grâce au canal de mesure de la pression entre l'intérieur du pneu et le capteur de pression, afin de détecter la pression d'air statique à l'intérieur du pneu.

2. Agencement de valve de roue selon la revendication 1, **caractérisé en ce que** le tronçon d'extrémité guidé de la tige de piston (19) est une douille de guidage (25) et qu'un tourillon de guidage (26), plongeant dans la douille de guidage (25), fait office d'élément de guidage, sur lequel la tige de piston (19) est guidée.

3. Agencement de valve de roue selon la revendication 1 ou 2, **caractérisé en ce que** le corps de valve (17) est en assise sur la tige de piston (19).

4. Agencement de valve de roue selon l'une des revendications 1 à 3, **caractérisé en ce que** la tige de piston (19) traverse le corps de valve (17) et plonge jusqu'à une tubulure de raccordement (11) de la valve de roue, fixée sur la roue supportant le pneu.

5. Agencement de valve de roue selon la revendication 4, **caractérisé en ce que** le tronçon de tige de piston (19) plongeant dans la tubulure de raccordement (11) de la valve de roue est conformé en tube de mesure (34) prolongeant la tige de piston (19).

6. Agencement de valve de roue selon la revendication 2, **caractérisé en ce que** le capteur de pression est disposé dans le tourillon de guidage ou dans le prolongement du tourillon de guidage.

7. Agencement de valve de roue selon l'une des revendications 1 à 5, **caractérisé en ce que** le canal de mesure de la pression se prolonge hors de l'élément de guidage dans ou contre le logement de la valve de roue (2), au moins un changement de direction étant prévu dans le tracé du canal de mesure, entre le tronçon du canal de mesure à l'intérieur de l'élément de guidage (26) et le capteur de pression.

8. Agencement de valve de roue selon la revendication 7, **caractérisé en ce que** l'au moins un changement de direction est un changement de direction de 90 degrés dans le trajet du canal de mesure.

9. Agencement de valve de roue selon la revendication 8, **caractérisé en ce que** l'agencement de valve de roue (1) présente un raccordement de mesure (33), auquel l'unité à capteur de mesure (D) est raccordée de manière amovible.

10. Agencement de valve de roue selon l'une des revendications 1 à 9, **caractérisé en ce que** la tige de piston (19) supporte un piston de commande (22) guidé dans un cylindre de commande (21) et que le cylindre de commande (21), avec son compartiment de commande (28) limité par le côté d'activation du piston de commande (22), est raccordable ou raccordé à une ligne de commande (29) actionnable pneumatiquement.

11. Système de régulation de la pression des pneus pour un véhicule comportant une source d'air comprimé disposé du côté du véhicule avec un passage tournant affecté à chaque roue raccordée au système de régulation de la pression des pneus, afin de transférer de l'air comprimé au pneu supporté par la roue, comportant un dispositif de commande pour gérer le processus d'augmentation et/ou de réduction de la pression interne du pneu raccordé au système de régulation de la pression et comportant un agencement de valve de roue (1) selon l'une des revendications 1 à 10 affecté à chaque roue raccordée au système de régulation de la pression des pneus.
